# EUROPÄISCHE PATENTSCHRIFT

(11) **EP 1 387 183 B1**
(45) Veröffentlichungstag und Bekanntmachung des Hinweises auf die Patenterteilung: **20.06.2012**
(21) Anmeldenummer: 03005296.3
(22) Anmeldetag: 11.03.2003
(51) Int. Cl.: G01S 13/93, G01S 17/93, B60T 7/22

(54) **Verfahren und Vorrichtung zur Ermittlung des Bevorstehens einer unausweichbaren Kollision**
Method and apparatus for determining an unavoidable collision event
Procédé et dispositif pour la détermination d'une collision inevitable

(30) Priorität: 02.08.2002 DE 10235414
(43) Veröffentlichungstag der Anmeldung: 04.02.2004
(73) Patentinhaber: ROBERT BOSCH GMBH, 70442 Stuttgart (DE)
(72) Erfinder: Knoop, Michael, 71638 Ludwigsburg (DE); Heinebrodt, Martin, 70176 Stuttgart (DE); Thiele, Joachim, 70732 Tamm (DE); Staempfle, Martin, 89075 Ulm (DE); Oechsle, Fred, 71642 Ludwigsburg (DE); Wilhelm, Ulf, 71277 Rutesheim (DE)

(56) Entgegenhaltungen:
- WO-A-01/94970
- US-A- 5 467 072
- US-A- 5 684 473
- US-A1- 2002 036 584

## Beschreibung

Die vorliegende Erfindung betrifft ein Verfahren und eine Vorrichtung zur Ermittlung des Bevorstehens einer unausweichbaren Kollision eines Fahrzeugs mit einem Objekt, wobei in Abhängigkeit der maximal möglichen Längs- bzw. Querbeschleunigungen des Fahrzeugs und des mindestens einen Objekts alle Aufenthaltsorte innerhalb eines bestimmbaren Vorhersagezeitraums vorausbestimmt werden. Unter zusätzlicher Berücksichtigung der Ausdehnungen des Fahrzeugs und des mindestens einen Objektes kann das Bevorstehen einer unausweichbaren Kollision zwischen dem Fahrzeug und dem Objekt erkannt werden.

### Stand der Technik

Aus der DE 197 22 947 C1 ist ein Verfahren und eine Vorrichtung zur Bestimmung eines zukünftigen Kursverlaufs oder Kursbereichs eines Fahrzeugs beschrieben, dessen Fahrgeschwindigkeit in Abhängigkeit von einem Abstand zu vorausfahrenden Fahrzeugen regelbar ist, wobei der zukünftige Kursbereich wenigstens anhand eines Kursverlaufs eines vorausfahrenden Fahrzeugs bestimmt wird. Dazu wird zu allen detektierten vorausfahrenden Fahrzeugen ein seitlicher Querversatz bestimmt. Gemäß einer Weiterbildung der Erfindung wird der bestimmte zukünftige Kursbereich anhand detektierter stationärer Objekte begrenzt.

Aus der US 5,467,072 ist ein Radarsystem mit einer phasengesteuerten Antenne bekannt, das in einem Kraftfahrzeug vor einer Kollision warnt. Hierbei wird die momentane Bewegung des eigenen Fahrzeugs und die Bewegung des mittels des Radarsystems erkannten Fahrzeugs in die Zukunft extrapoliert und bei einer vorausberechneten Annäherung beider Bewegungswege unter einen vorbestimmten Mindestabstand das Vorliegen einer unsicheren Fahrsituation erkannt.

Aus der WO 01/94970 ist ein Radarsystem bekannt, das anhand von Datenpunkten, die die Position eines Fahrzeugkurses repräsentieren, bestimmt und ein damit verbundener Bewegungsweg bestimmt. Weiterhin wird eine Messung zur Bestimmung der Qualität der Berechnung und eine Fahrtrichtungsmessung durchgeführt und in Kartenkoordinaten umgerechnet. Mit diesen Daten werden die zukünftigen Bewegungswege vorausberechnet und durch eine Situationserkennungsschätzeinrichtung ein Zusammenstoss sowie mittels einer Kollisionsschwereschätzeinrichtung die Stärke der Kollision vorausgeschätzt.

### Kern und Vorteile der Erfindung

Der Kern der vorliegenden Erfindung ist es, ein Verfahren und eine Vorrichtung anzugeben, die es ermöglichen, das Bevorstehen einer unausweichbaren Kollision eines Fahrzeugs mit mindestens einem Objekt zu erkennen und in Abhängigkeit dieser Erkennung geeignete Maßnahmen einzuleiten. Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhafterweise werden bei Erkennen einer bevorstehenden, unausweichbaren Kollision Maßnahmen eingeleitet, die den Fahrer des Fahrzeugs warnen und/oder die Kollisionsstärke reduzieren und/oder das Verletzungsrisiko der Insassen mindern und/oder das Fahrzeug so beeinflussen, dass das Verletzungsrisiko der Insassen vermindert wird. Hierunter ist insbesondere das Einleiten einer Notbremsung, die eine Verzögerung aufweist, die in etwa der maximal möglichen Fahrzeugverzögerung entspricht, gemeint, das Auslösen von Rückhaltesystemen, insbesondere von Gurtstraffern und/oder Airbags gemeint bzw. das gezielte Verzögern einzelner Fahrzeugräder gemeint, wodurch das Fahrzeug in der bevorstehenden, unausweichbaren Kollision derart mit dem Objekt kollidiert, dass für die Insassen ein minimiertes Verletzungsrisiko besteht.

Weiterhin ist es vorteilhaft, dass zur Vorausbestimmung der zukünftigen Aufenthaltsorte des Fahrzeugs und des mindestens einen Objekts mindestens eine der Größen momentane Position, momentane Längs- und Quergeschwindigkeit, Orientierungsrichtungen des Objektes und/oder des Fahrzeugs, sowie die räumlichen Objektausdehnungen ausgewertet werden. Unter der momentanen Position ist hierbei die Relativposition des mindestens einen Objektes zu dem Fahrzeug zu verstehen oder aber auch die Positionen des Fahrzeugs und des Objektes in Verbindung mit der Gesamtumfeldsituation, die beispielsweise ruhende Objekte am Fahrzeugrand mit einbeziehen kann. Die Größen, momentane Position, momentane Längs- und Quergeschwindigkeit sowie Orientierungsrichtung des Fahrzeugs und des Objektes können durch geeignete Sensoreinrichtungen erkannt werden und dem erfindungsgemäßen Verfahren als Eingangsgrößen zugeführt werden.

Besonders vorteilhaft ist es, dass die momentane Position, die momentane Längs- und Quergeschwindigkeit sowie die Orientierungsrichtung des Fahrzeugs oder des Objektes sowie die räumliche Objektausdehnung, insbesondere in Lateralrichtung, mit mindestens einem Radar, Lidar- oder Videosensor oder einer Kombination hieraus ermittelt werden.

Weiterhin ist es vorteilhaft, dass die Annahme der maximal möglichen Längs- bzw. Querbeschleunigungen des mindestens einen Objekts oder der Objekte in Abhängigkeit einer Zuordnung der Objekte zu Objektklassen durchgeführt wird. Die Abgrenzung der einzelnen Objektklassen untereinander kann erfindungsgemäß nach unterschiedlichen Kriterien erfolgen. Besonders vorteilhaft ist hierbei zu erwähnen, dass die Zuordnung der Objekte zu Objektklassen in Abhängigkeit der Detektion durch unterschiedliche Sensorsysteme erfolgt. Je nach dem ob ein Objekt mittels eines Radar, Lidar- oder Videosensors erkannt werden kann oder von einer Kombination hieraus erkannt werden kann, können die Objekte den Objektklassen zugeordnet werden. Die Zuordnung der Objekte zu den Objektklassen erfolgt in Abhängigkeit der Meßdaten eines oder mehrerer Sensoren vorteilhafterweise anhand der durch Lidar- und/oder radarsensoren gemessenen Objektausdehnung oder anhand des videosensorisch ermittelten Grauwertmusters. Beispielsweise ist ein Fußgänger mittels eines Videosensors eher erkennbar, wobei ein Radarsensor in diesem Fall eine wesentlich unzuverlässigere Detektion erlaubt. Weiterhin ist es im Sinne der Erfindung, dass die Zuordnung der Objekte zu Objektklassen in Abhängigkeit der gemessenen Objektgeschwindigkeiten erfolgt. Mittels einer derartigen Objektklassifikation lassen sich die erkannten Objekte beispielsweise in stehende, angehaltene, langsambewegende oder schnellbewegende Objekte einordnen. Aufgrund dieser Zuordnung ist es weiterhin möglich, eine Einschätzung über die zukünftige, maximal mögliche Beschleunigung der Objekte sowie deren Beschleunigungsrichtungen voraussagen.

Weiterhin ist es vorteilhaft, dass der Zeitraum, für den eine Voraussage über das Bevorstehen einer unausweichbaren Kollision getroffen wird, veränderbar ist und an die momentane Verkehrssituation, die durch die Umfeldsensorik erkannt wird, anpaßbar ist. Da das erfindungsgemäße Verfahren zukünftige Objekttrajektorien vorausberechnet, ist ein hoher Rechenaufwand erforderlich. In Abhängigkeit der Anzahl der erkannten Objekte sowie deren Klassifikation ist es vorteilhaft, wenn der Zeitraum der Vorhersage variabel gestaltet wird, da in Abhängigkeit der Objektanzahl und Objektklassen der Rechenaufwand sehr unterschiedlich sein kann. Durch einen variablen Vorhersagezeitraum läßt sich auch die Genauigkeit der Vorhersage in diesem Zeitraum verändern, wodurch das Verfahren auf die Umfeldsituation jederzeit angepaßt werden kann.

Vorteilhafterweise wird das Bevorstehen einer unausweichbaren Kollision festgestellt, wenn innerhalb des Vorhersagezeitraums ein Zustand eintritt, zu dem sich der vorausberechnete Trajektorienschlauch des Fahrzeugs mit dem vorausberechneten Trajektorienschlauch mindestens eines Objektes unter Berücksichtigen der jeweils halben Fahrzeug- bzw. Objektlateralausdehnungen schneidet und gleichzeitig keine vorausberechnete mögliche Trajektorie mehr existiert, die eine kollisionsfreie Bewegung beschreibt. Bei Vorliegen einer derartigen Situation ist eine Kollision unausweichbar und es werden geeignete Maßnahmen zur Warnung des Fahrers und/oder zur Reduzierung der Kollisionsstärke und/oder des Verletzungsrisikos der Insassen eingeleitet.

Weiterhin vorteilhaft ist es, dass die von den Ausgabemitteln ansteuerbaren Einrichtungen zur Reduzierung der Kollisionsstärke und/oder des Verletzungsrisikos der Insassen mindestens eine der Vorrichtungen Verzögerungseinrichtung, Lenkvorrichtung oder Insassen-Rückhaltesysteme umfaßt. Durch Ansteuerung mindestens einer der genannten Vorrichtungen ist es möglich, bei einer festgestellten, bevorstehenden, unausweichbaren Kollision den Fahrer zu warnen und/oder die Kollisionsstärke zu reduzieren und/oder das Verletzungsrisiko der Insassen zu mindern.

Von besonderer Bedeutung ist die Realisierung des erfindungsgemäßen Verfahrens in der Form eines Steuerelementes, das für ein Steuergerät eines Kraftfahrzeugs vorgesehen ist. Dabei ist auf dem Steuerelement ein Programm gespeichert, das auf einem Rechengerät, insbesondere auf einem Mikroprozessor oder Asic ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Zeichnungen

Nachfolgend werden Ausführungsbeispiele der Erfindung anhand von Zeichnungen erläutert. Es zeigen
- Figur 1: eine Darstellung des Fahrzeugs sowie des mindestens einen Objekts sowie die Bestimmung der Fahrzeug- bzw. Objektlateralausdehnung,
- Figur 2: die Ermittlung des Trajektorienschlauchs über der Zeit,
- Figur 3: die Darstellung der möglichen Aufenthaltsorte zu einem bestimmten Zeitpunkt t1,
- Figur 4: die Trajektorienauswertung für den Fall, dass keine Kollision möglich ist,
- Figur 5: die Trajektorienauswertung für den Fall, dass eine Kollision unausweichbar ist,
- Figur 6: ein Blockschaltbild der erfindungsgemäßen Vorrichtung.

### Beschreibung von Ausführungsbeispielen

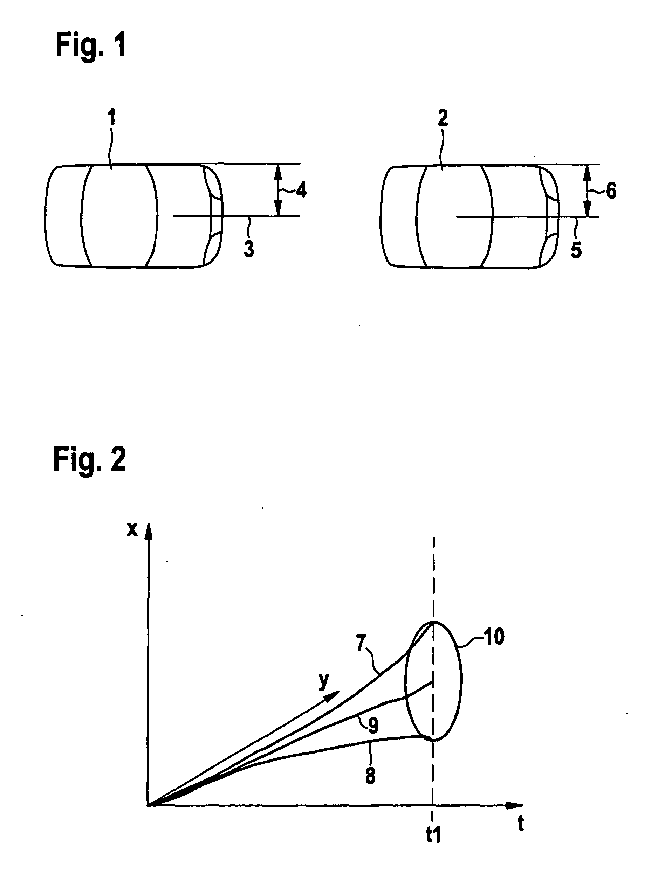

In Figur 1 ist dargestellt, wie die Fahrzeug- bzw. Objektlateralausdehnung bestimmt wird. Zu erkennen ist das Fahrzeug 1, das mit dem erfindungsgemäßen Verfahren ausgerüstet ist, sowie das mindestens eine Objekt 2, das in diesem Fall beispielhaft als weiteres Fahrzeug dargestellt wurde. Es kann sich bei diesem mindestens einen Objekt 2 aber auch um jedes weitere bewegliche oder stationäre Objekt handeln, das im Straßenverkehr vorstellbar ist. Weiterhin ist die Fahrzeuglängsachse 3 eingezeichnet, die die Mittelachse des Fahrzeugs in Längsrichtung bildet. Die Fahrzeuglateralausdehnung 4 ist in diesem Falle die halbe Fahrzeugbreite, und wird durch die Fahrzeuglängsachse 3 sowie die äußerste seitliche Berandung des Fahrzeugs begrenzt. Analog zur Bestimmung der halben Fahrzeuglateralausdehnung 4 bestimmt sich die halbe Objektlateralausdehnung 6. Diese halbe Objektlateralsausdehnung 6 wird begrenzt durch die Längsachse 5, die in Bewegungsrichtung des Objektes 2 orientiert ist sowie der äußersten seitlichen Objektbegrenzung. Die Berücksichtigung der halben Fahrzeuglateralausdehnung bzw. der halben Objektlateralausdehnung ist für die Bestimmung des Bevorstehens einer unausweichbaren Kollision von besonderer Bedeutung. Im Fall, dass die Orientierungsrichtung des Objektes beispielsweise in Form der Fahrzeuglängsachse nicht berücksichtigt wird oder nicht erfasst werden kann wird ein Kreis mit dem Radius der halben Objektlateralausdehnung angenommen. Bei Berücksichtigung der Orientierungsrichtung des Objektes beispielsweise in Form der Fahrzeuglängsachse kann die tatsächliche Objektgeometrie berücksichtigt werden, die mittels der Umfeldsensorik erfassbar ist. Die Größe kann durch geeignete Sensoren erfaßt und bestimmt werden oder falls dies nicht möglich sein sollte ist weiterhin auch denkbar, dass die Größe der halben Objektlateralausdehnung als Standardannahme in Abhängigkeit der erkannten Objektklasse angenommen wird.

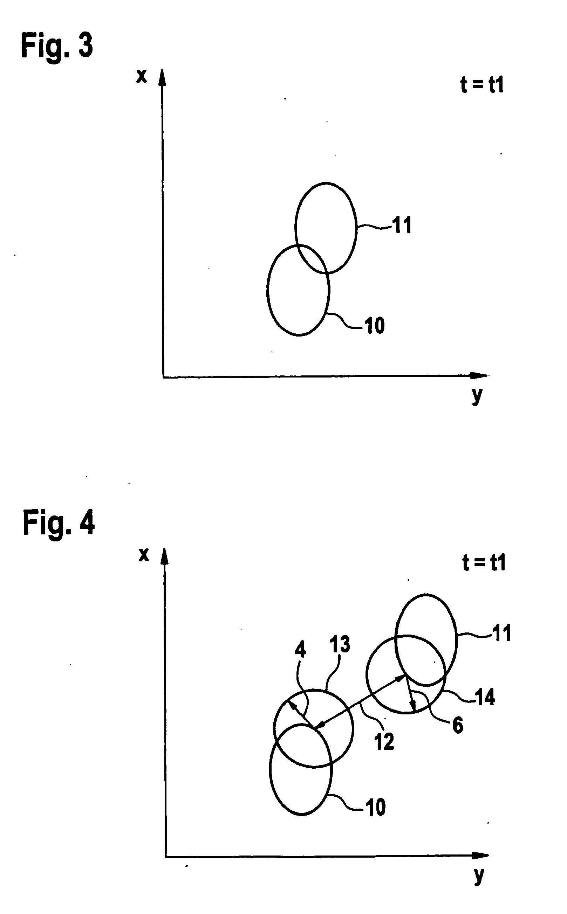

In Figur 2 ist die Bestimmung des Trajektorienschlauchs über der Zeit dargestellt. Hierzu wurde ein Raum-Zeit-Diagramm gewählt, in dem t die Zeitachse darstellt und die Achsen x und y ein räumliches Orthogonalsystem in Fahrzeuglängs- und Fahrzeugquerrichtung darstellen. Betrachtet man die momentan maximal mögliche Fahrzeugbeschleunigung, die das Fahrzeug in Zukunft vornehmen kann, so erhält man eine Kurve 7, die die maximale Beschleunigung im Raum-Zeit-Diagramm darstellt. Trägt man weiterhin eine Kurve auf, die die minimal mögliche Beschleunigung in Fahrzeuglängsrichtung darstellt, wobei hierunter auch eine maximal mögliche Fahrzeugverzögerung gemeint sein kann, so erhält man eine Kurve im Raum-Zeit-Diagramm nach Art der Linie 8. Eine weitere Linie 9 stellt hierbei die maximal mögliche Fahrzeugquerbeschleunigung in eine Richtung dar, die jedoch ebenso in der entgegengesetzten Fahrzeugquerrichtung berechnet wird. Zusätzlich zu den betrachteten Fällen der Linien 7, 8, 9 werden alle weiteren maximalen Fahrzeugbeschleunigungen in allen anderen Richtungen, die sich aus einer Kombination aus Längs- und Querrichtung zusammensetzt, berechnet, wodurch sich ein Trajektorienschlauch ergibt, der sich in Richtung zukünftiger Zeitpunkte, also in Richtung steigender t-Werte, immer stärker aufweitet. Schneidet man diesen räumlichen Trajektorienschlauch mit einer Ebene zum Zeitpunkt t=t1, wobei die Ebene parallel zur xy-Ebene aufgestellt wird, so erhält man eine in sich geschlossene Linie 10, die den maximal erreichbaren Bereich abgrenzt, der bis zum Zeitpunkt t=t1 durch das Fahrzeug erreichbar ist. Punkte innerhalb dieser in sich geschlossenen Linie 10 sind auch mit Fahrzeuglängs- und -querbeschleunigungen erreichbar, die unterhalb der maximal möglichen Fahrzeugverzögerungen liegen; Punkte außerhalb der in sich geschlossenen Linie 10 sind fahrphysikalisch durch das Fahrzeug 1 nicht bis zum Zeitpunkt t=t1 durch das Fahrzeug erreichbar. Wahlweise können auch die maximalen Fahrzeugverzögerungen verwendet werden, die den Dynamikbereich eines Komfortsystems begrenzen. In diesem Fall handelt es sich nicht um maximal mögliche, fahrphysikalische Grenzen sondern um Komfortgrenzen. Das gleiche Vorgehen kann auf sämtliche erkannten Objekte 2 angewendet werden, wobei hier zur Berechnung des Trajektorienschlauches Beschleunigungswerte angenommen werden können, die aufgrund der zugeordneten Objektklasse hinterlegt wurden oder Beschleunigungswerte aufgrund der gemessenen Geschwindigkeiten des Fahrzeugs 1 oder des Objektes 2 angenommen werden. Dies ist insbesondere dann vorteilhaft, wenn die von der Fahrzeugumfeldsensorik gelieferten Werte keine Bestimmung der möglichen Beschleunigungswerte des Objektes 2 ermöglichen. Ein derartiger Trajektorienschlauch bestimmt hiermit sämtliche räumlichen und zeitlich in Zukunft liegenden Punkte, die durch das Fahrzeug 1 oder das Objekt 2 fahrphysikalisch erreicht werden können sowie alle die Punkte, die durch das Fahrzeug bzw. das Objekt nicht erreichbar sind. Trägt man die Trajektorienschläuche des Fahrzeug 1 sowie der durch die Fahrzeugumfeldsensorik erkannten Objekte 2 in ein gemeinsames Raum-Zeit-Diagramm gemäß Figur 2 ein, so erhält man mehrere Trajektorienschläuche, deren Auswertung das Erkennen einer unausweichbaren Kollision ermöglichen. Hierzu betrachtet man die Trajektorienschläuche zu unterschiedlichen Zeitpunkten, wobei im Weiteren beispielhaft ein beliebiger Zeitpunkt t=t1 herausgenommen wird. Schneidet man das Raum-Zeit-Diagramm gemäß Figur 2 mit einer Ebene zum Zeitpunkt t=t1, die parallel zur xy-Ebene aufgespannt ist, so schneiden die Trajektorienschläuche des Fahrzeugs 1 sowie der Objekte 2 die aufgespannte Ebene zum Zeitpunkt t=t1. Diese Schnittebene wird im Weiteren in Figur 3 betrachtet. Zu sehen ist das räumliche xy-Diagramm, das in Fahrzeuglängs- und Querrichtung aufgetragen ist und eine vorausberechnete Momentaufnahme zum Zeitpunkt t=t1 darstellt. In diesem Diagramm sind zwei in sich geschlossene Linien 10, 11 dargestellt, wobei die Linie 10 die Begrenzung aller vom Fahrzeug 1 erreichbaren Punkte zum Zeitpunkt t=t1 repräsentiert und die Linie 11 die Begrenzung aller von dem mindestens einen Objekt 2 erreichbaren Punkte bis zum Zeitpunkt t=t1 repräsentiert. Zur Bestimmung ob eine unausweichbare Kollision zwischen dem Fahrzeug und mindestens einem Objekt 2 vorliegt, ist weiterhin eine Berücksichtigung der Fahrzeuglateralausdehnung und der Objektlateraldehnung notwendig.

In Figur 4 ist das gleiche Koordinatensystem dargestellt wie in Figur 3 erläutert. Auch in Figur 4 ist der maximal mögliche Fahrzeugaufenthaltsbereich 10 sowie der maximal mögliche Objektaufenthaltsbereich 11 zum Zeitpunkt t=t1 aufgetragen. Im Weiteren muß der Punkt der Begrenzungslinie des maximal möglichen Fahrzeugaufenthaltsbereichs 10 sowie der Punkt der Begrenzungslinie des maximal möglichen Objektaufenthaltsbereichs 11 gefunden werden, die den kürzesten Abstand zueinander aufweisen. Diese beiden Punkte werden in Figur 4 durch den Doppelpfeil 12 angezeigt. Die Länge des Doppelpfeils 12 repräsentiert den minimal erreichbaren Abstand zwischen dem Fahrzeug 1 und dem Objekt 2. Zur Berücksichtigung der Fahrzeuglateralausdehnung muß um den Punkt der Begrenzungslinie des maximal möglichen Fahrzeugaufenthaltsbereichs 10, der durch das eine Ende des Doppelpfeils 12 markiert wird, ein Kreis mit dem Radius der halben Fahrzeuglateralausdehnung 4 beschrieben werden. Auf die gleiche Art und Weise wird die Objektlateralausdehnung berücksichtigt, indem um den Punkt der maximal möglichen Objektaufenthaltsbereichs 11, der durch das andere Ende des Doppelpfeils 12 markiert wird, ein Kreis mit dem Radius 6, der der halben Objketlateralausdehnung entspricht, beschrieben werden. In dem in Figur 4 dargestellten Fall, dass sich die Kreise 13 und 14 weder berühren, noch überschneiden, kann gefolgert werden, dass eine Kollision zwischen dem Fahrzeug 1 und dem Objekt 2 während dem Zeitraum von t=0 bis t=t1 nicht möglich ist, da keine Bewegungstrajektorie existiert, die unter Berücksichtigung der maximal möglichen Fahrzeug- bzw. Objektdynamik zu einer Kollision führen wird. Für den Fall, dass sich die Kreise 13 und 14 überschneiden, ist es möglich, dass eine Kollision entstehen könnte. Eine Aussage über das Bevorstehen einer unausweichbaren Kollision kann jedoch in diesem Fall noch nicht getroffen werden.

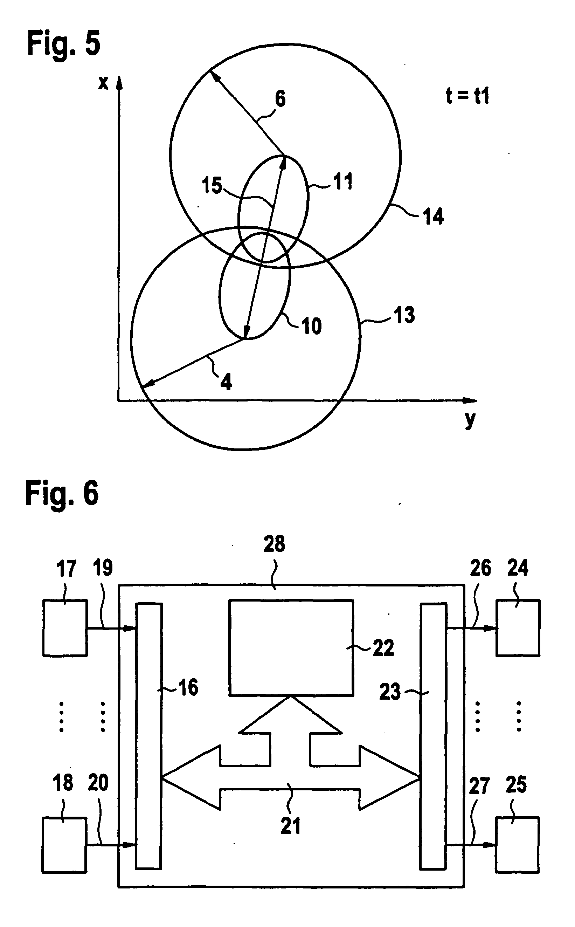

In Figur 5 ist ein xy-Diagramm zum Zeitpunkt t=t1 dargestellt, das den Diagrammen aus Figur 3 und 4 entspricht. In diesem Diagramm ist wieder der maximal mögliche Fahrzeugaufenthaltsbereich 10 eingezeichnet sowie der maximal mögliche Objektaufenthaltsbereich 11. Zur Bestimmung des Bevorstehens einer unausweichbaren Kollision ist es notwendig, die beiden Punkte auf den Linien 10 und 11 zu bestimmen, die am weitesten voneinander entfernt liegen. Diese beiden Punkte repräsentieren jeweils die Bewegungstrajektorien, auf denen sich das Fahrzeug 1 und das Objekt 2 zum Zeitpunkt t=t1 am weitesten voneinander entfernen können. In Figur 4 werden diese beiden Punkte durch die Endpunkte des Doppelpfeils 15 dargestellt, wobei die Länge des Doppelpfeils 15 den maximal erreichbaren Abstand zwischen dem Fahrzeug 1 und dem Objekt 2 darstellt. Beschreibt man um den Endpunkt des Doppelpfeils 15 auf der Linie 10 einen Kreis 13 mit dem Radius der halben Fahrzeuglateralausdehnung 4, so kann man den Bereich bestimmen, der bis zum Zeitpunkt t=t1 vom Fahrzeug 1 erreichbar ist und durch die Fahrzeugausdehnung abgedeckt werden kann. Beschreibt man um den zweiten Endpunkt des Doppelpfeils 15 einen Kreis 14 mit dem Radius der halben Objektlateralausdehnung 6, so beschreibt der Kreis 14 die Objektausdehnung für den Fall, dass sich das Objekt möglichst weit vom Fahrzeug 1 entfernt. Überschneiden sich in dieser Konstruktion die Kreise 13 und 14, so kann mit großer Wahrscheinlichkeit vorhergesagt werden, dass eine unausweichbare Kollision zwischen dem Fahrzeug 1 und dem Objekt 2 besteht. In diesem Fall besteht zum Zeitpunkt t=t1 keine Fahrzeugtrajektorie und keine Objekttrajektorie auf denen sich das Fahrzeug 1 bzw. das Objekt 2 bewegen können um eine Kollision miteinander zu vermeiden. In diesem Fall werden geeignete Maßnahmen ausgelöst, die die unausweichbare Kollision vermindern sollen bzw. das Verletzungsrisiko der Insassen verringern sollen.

In Figur 6 ist eine Vorrichtung 28 zum Durchführen des erfindungsgemäßen Verfahrens abgebildet. Die Vorrichtung 28 umfaßt ein Eingangsfeld 16, dem Signale 19 bis 20 von Sensoreinheiten 17 bis 18 zugeführt werden. Die Sensoreinheiten 17 bis 18 können vorteilhafterweise Radar-, Lidar- oder Videosensoren sein, die das Fahrzeugumfeld in verschiedenen Entfernungen und im Hinblick auf verschiedene Objektarten erfassen und dem Eingangsfeld 16 der Vorrichtung 28 zuführen. Die Vorrichtung 28 umfaßt weiterhin eine Datenaustauscheinrichtung 21, die die Eingangssignale des Eingangsfeldes 16 zur Ermittlungseinheit 22 leitet, sowie Daten von der Ermittlungseinheit 22 zum Ausgangsfeld 23 weiterleitet. Vorteilhafterweise ist die Datenaustauscheinrichtung 21 als Bussystem ausgeführt, das per Se bekannt ist und vorteilhafterweise als CAN-Bus realisiert sein kann. In der Ermittlungseinheit 22 werden die der Vorrichtung 28 zugeführten Signale 19 bis 20 gemäß dem beschriebenen Verfahren zur Feststellung des Bevorstehens einer unausweichbaren Kollision ausgewertet und gegebenenfalls ein geeignetes Ausgangssignal erzeugt. Das derart erzeugte Ausgangssignal wird von der Ermittlung 22 über die Datenaustauscheinrichtung 21 an das Ausgangsfeld 23 weitergeleitet, und von hier aus in Form der Ausgangssignale 26 bis 27 an die ansteuerbaren Einrichtungen 24 bis 25 weitergeleitet. Bei diesen ansteuerbaren Einrichtungen 24 bis 25 handelt es sich vorteilhafterweise um mindestens eine Verzögerungseinrichtung und/oder eine Lenkvorrichtung und/oder mindestens ein Insassen-Rückhaltesystem, die bei einer erkannten, unausweichbaren Kollision derart angesteuert werden, dass die Kollisionsstärke bzw. das Verletzungsrisiko der Insassen minimiert wird.

## Patentansprüche

1. Verfahren zur Ermittlung des Bevorstehens einer unausweichbaren Kollision eines Fahrzeugs mit mindestens einem Objekt, wobei die momentane Position, die momentane Längs- und Quergeschwindigkeit, die Orientierungsrichtung sowie die räumliche Objektausdehnung der Objekte mit mindestens einem Radar-, Lidar- oder Videosensor oder einer Kombination hieraus ermittelt wird, dass zur Vorausbestimmung der zukünftigen Aufenthaltsorte des Fahrzeugs und des mindestens einen Objekts mindestens eine der Größen momentane Position, momentane Längs- und Quergeschwindigkeit, Orientierungsrichtung des Objektes sowie räumliche Objektausdehnung ausgewertet wird, **dadurch gekennzeichnet dass** eine Annahme der maximal möglichen Längs- und Querbeschleunigungen des mindestens einen Objekts oder der Objekte in Abhängigkeit einer Zuordnung der Objekte zu Objektklassen durchgeführt wird wobei die Zuordnung der Objekte zu Objektklassen in Abhängigkeit der mit einem Video- oder Lidarsensor gemessenen Objektausdehnung erfolgt und in Abhängigkeit der maximal möglichen Längs- und Querbeschleunigungen des Fahrzeugs und des mindestens einen Objekts alle Aufenthaltsorte innerhalb eines bestimmbaren Vorhersagezeitraums vorausbestimmt werden, die durch die maximal möglichen Längs- und Querbeschleunigungen innerhalb des Vorhersagezeitraums erreichbar sind, und unter Berücksichtigung der Ausdehnungen des Fahrzeugs und des mindestens einen Objektes das Bevorstehen einer unausweichbaren Kollision zwischen dem Fahrzeug und dem mindestens einen Objekt erkannt wird, wenn innerhalb des Vorhersagezeitraums ein Zustand eintreten wird, zu dem sich der Trajektorienschlauch des Fahrzeugs mit dem Trajektorienschlauch mindestens eines Objekts schneidet, wobei die Trajektorienschläuche die erreichbaren Aufenthaltsorte des Fahrzeugs bzw. des mindestens einen Objekts über der Zeit im Raum-Zeit Diagramm repräsentieren, und unter Berücksichtigung der jeweils halben Fahrzeug- und Objektlateralausdehnungen, keine Trajektorie mehr existiert, die eine kollisionsfreie Bewegung beschreibt.

2. Verfahren nach Anspruch 1, **dadurch gekennzeichnet, dass** bei Erkennen einer bevorstehenden, unausweichbaren Kollision Maßnahmen eingeleitet werden, die die Kollisionsstärke reduzieren und/oder das Verletzungsrisiko der Insassen mindern und/oder das Fahrzeug so beeinflussen, dass das Verletzungsrisiko der Insassen vermindert wird und/oder den Fahrer warnen.

3. Verfahren nach Anspruch 1, **dadurch gekennzeichnet, dass** die Zuordnung der Objekte zu Objektklassen in Abhängigkeit der Detektion durch unterschiedliche Sensorsysteme erfolgt.

4. Verfahren nach Anspruch 1, **dadurch gekennzeichnet, dass** die Zuordnung der Objekte zu Objektklassen in Abhängigkeit eines videosensorisch gefundenen Grauwertmusters erfolgt.

5. Verfahren nach Anspruch 1, **dadurch gekennzeichnet, dass** der Zeitraum für den
eine Voraussage über das Bevorstehen einer unausweichbaren Kollision getroffen wird, veränderbar ist und in Abhängigkeit der Verkehrssituation
verändert wird.

6. Vorrichtung zur Ermittlung des Bevorstehens einer unausweichbaren Kollision eines Fahrzeugs mit mindestens einem Objekt, wobei die Vorrichtung Eingangsmittel umfaßt, mittels derer der Vorrichtung Eingangssignale von mindestens einem Radar- Lidar- oder Videosensor oder einer Kombination hieraus zugeführt werden, wobei die Vorrichtung eine Ermittlungseinheit umfaßt, in der das Bevorstehen einer unausweichbaren Kollision mit mindestens einem Objekt ermittelbar ist, und dass die Vorrichtung Ausgabemittel zur Ansteuerung von Einrichtungen umfaßt, mittels derer bei Erkennen einer bevorstehenden, unausweichbaren Kollision Maßnahmen eingeleitet werden, die die Kollisionsstärke reduzieren und/oder das Verletzungsrisiko der Insassen reduzieren **dadurch gekennzeichnet, dass** die Vorrichtung das Verfahren nach einem der vorhergehenden Ansprüche ausführt.

7. Vorrichtung nach Anspruch 6, **dadurch gekennzeichnet, dass** die von den Ausgabemitteln ansteuerbaren Einrichtungen mindestens eine der Vorrichtungen Verzögerungseinrichtung, Lenkvorrichtung oder Insassenrückhaltesysteme umfaßt.

## Claims

1. Method for detecting the imminence of an unavoidable collision of a vehicle with at least one object, wherein the instantaneous position, the instantaneous longitudinal speed and lateral speed, the direction of orientation and the spatial extent of the objects are detected with at least one radar sensor, lidar sensor or video sensor or a combination thereof, in that in order to determine the future locations of the vehicle and of the at least one object in advance at least one of the variables of instantaneous position, instantaneous longitudinal speed and lateral speed, direction of orientation of the object and spatial extent of the object is evaluated, **characterized in that** an assumption is made regarding the maximum possible longitudinal acceleration and lateral acceleration of the at least one object or the objects as a function of an assignment of the objects to object classes, wherein the objects are assigned to object classes as a function of the extent of the object measured with a video sensor or lidar sensor, and all the locations which can be reached by the maximum possible longitudinal acceleration and lateral acceleration within a prediction time period are determined in advance within the determinable prediction time period as a function of the maximum possible longitudinal acceleration and lateral acceleration of the vehicle and of the at least one object, and the imminence of an unavoidable collision between the vehicle and the at least one object is detected taking into account the extent dimensions of the vehicle and of the at least one object, if within the prediction time period a state will occur in which the trajectory hose of the vehicle intersects with the trajectory hose of at least one object, wherein the trajectory hoses represent the locations of the vehicle or of the at least one object which can be reached over the time in a space/time diagram, and taking into account the respective half vehicle and object lateral extent dimensions there is no longer a trajectory which describes a collision-free movement.

2. Method according to Claim 1, **characterized in that**, when an imminent unavoidable collision is detected, measures are initiated which reduce the severity of the collision and/or alleviate the risk of injury to the vehicle occupants and/or influence the vehicle such that the risk of injury to the vehicle occupants is reduced and/or warn the driver.

3. Method according to Claim 1, **characterized in that** the objects are assigned to object classes as a function of the detection by different sensor systems.

4. Method according to Claim 1, **characterized in that** the objects are assigned to object classes as a function of a grey scale value pattern which is acquired by video sensor.

5. Method according to Claim 1, **characterized in that** the time period for which a prediction is made about the imminence of an unavoidable collision can be changed and is changed as a function of the traffic situation.

6. Device for determining the imminence of an unavoidable collision of a vehicle with at least one object, wherein the device comprises input means by means of which input signals from at least one radar sensor, lidar sensor or video sensor or a combination thereof are fed to the device, wherein the device comprises a detection unit in which the imminence of an unavoidable collision with at least one object can be detected, and wherein the device comprises output means for actuating devices by means of which, when an imminent unavoidable collision is detected, measures are initiated which reduce the severity of the collision and/or reduce the risk of injury to the vehicle occupants, **characterized in that** the device carries out the method according to one of the preceding claims.

7. Device according to Claim 6, **characterized in that** the devices which can be actuated by the output means comprise at least one of the devices of the delay device, steering device or vehicle occupant restraining systems.

## Revendications

1. Procédé de détermination de l'imminence d'une collision inévitable entre un véhicule et au moins un objet,
dans lequel la position instantanée, la vitesse longitudinale et la vitesse transversale instantanées, l'orientation ainsi que l'extension spatiale des objets sont déterminées à l'aide d'au moins un détecteur radar, un détecteur lidar, un détecteur vidéo ou une de leurs combinaisons en évaluant pour déterminer préalablement le futur emplacement du véhicule et du ou des objets au moins l'une des grandeurs que sont la position instantanée, la vitesse longitudinale et la vitesse transversale instantanées, l'orientation de l'objet ainsi que l'extension spatiale de l'objet, **caractérisé en ce que**
une hypothèse sur les accélérations longitudinales et transversales maximales possibles du ou des objets est posée en associant les objets à des classes d'objets, l'association des objets à des classes d'objets s'effectuant en fonction de l'extension des objets mesurée à l'aide d'un détecteur vidéo ou d'un détecteur lidar, et
**en ce qu'**en fonction des accélérations longitudinales et transversales maximales possibles du véhicule et du ou des objets, tous les emplacements qui peuvent être atteints dans un laps de temps de prédiction prédéterminé compte tenu des accélérations longitudinales et transversales maximales possibles sont prédéterminés,
l'imminence d'une collision inévitable entre le véhicule et le ou les objets étant détectée en tenant compte de l'extension du véhicule et du ou des objets si dans le laps de temps de prédiction survient une situation dans laquelle la courbe de la trajectoire du véhicule coupe la courbe de la trajectoire d'au moins un objet, les courbes de trajectoire représentant par l'intermédiaire du temps dans un diagramme espace-temps les emplacements que le véhicule et le ou les objets peuvent atteindre et si, en tenant compte de la moitié de l'extension latérale du véhicule et de l'objet, il n'existe plus de trajectoire qui décrit un déplacement exempt de collision.

2. Procédé selon la revendication 1, **caractérisé en ce qu'**en cas de détection de l'imminence d'une collision inévitable, des dispositions sont prises pour réduire l'intensité de la collision, diminuer le risque de blessures des passagers et/ou agir sur le véhicule de telle sorte que le risque de blessures des passagers soit diminué, et/ou qui avertissent le conducteur.

3. Procédé selon la revendication 1, **caractérisé en ce que** l'association des objets à des classes d'objets s'effectue en fonction de la détection par différents systèmes de détection.

4. Procédé selon la revendication 1, **caractérisé en ce que** l'association des objets à des classes d'objets s'effectue en fonction d'un motif en valeur de gris établi à l'aide d'un détecteur vidéo.

5. Procédé selon la revendication 1, **caractérisé en ce que** le laps de temps pour lequel une prédiction de l'imminence d'une collision inévitable est faite peut être modifié et est modifié en fonction de la situation du trafic.

6. Dispositif en vue de la détermination de l'imminence d'une collision inévitable entre un véhicule et au moins un objet, le dispositif comportant des moyens d'entrée au moyen desquels des signaux d'entrée d'au moins un détecteur radar, un détecteur lidar, un détecteur vidéo ou une de leurs combinaisons sont apportés au dispositif, le dispositif comportant une unité de détermination dans laquelle l'imminence d'une collision inévitable avec au moins un objet peut être déterminée, le dispositif comprenant des moyens de sortie qui commandent des ensembles au moyen desquels, en cas de détection de l'imminence d'une collision inévitable, des dispositions sont prises pour réduire l'intensité de la collision et/ou pour réduire le risque de blessures des passagers,
**caractérisé en ce que**
le dispositif exécute le procédé selon l'une des revendications précédentes.

7. Dispositif selon la revendication 6, **caractérisé en ce que** les ensembles commandés par les moyens de sortie comprennent au moins l'un des ensembles que sont un ensemble de ralentissement, un dispositif de braquage ou des systèmes de retenue des passagers.
